# EUROPÄISCHE PATENTANMELDUNG

(11) **EP 1 293 173 A2**
(43) Veröffentlichungstag der Anmeldung: **19.03.2003**
(21) Anmeldenummer: 02018477.6
(22) Anmeldetag: 16.08.2002
(51) Int. Cl.: A61C 8/00

(54) **Rotierendes dental-chirurgisches Instrument mit Kühlmittelkanal**

(30) Priorität: 14.09.2001 DE 20115184 U
(71) Anmelder: Busch & Co.KG, 51766 Engelskirchen (DE)
(72) Erfinder: Busch, Gert, 51766 Engelskirchen (DE)
(74) Vertreter: Maxton Langmaack & Partner

(57) **Zusammenfassung**

Die Erfindung betrifft ein rotierendes dental-chirurgisches Instrument für die Vorbereitung eines Kieferknochens zur Aufnahme eines Implantates, mit einem Grundkörper (1), der ein mit einem Winkelstück (2) verbindbares Spannende (3) und einen daran anschließenden Arbeitsbereich (4) aufweist, der auf seiner Außenfläche mit wenigstens einer im wesentlichen axial verlaufenden Nut (5) versehen ist und der einen endseitigen Schneidenbereich (6) mit wenigstens einem stegförmigen Schneidelement (7; 7.1; 7.2) versehen ist, das zwei sich radial erstreckende, stirnseitig ausgerichtete Schneidkanten (8) aufweist, sowie mit einem im Grundkörper (1) axial verlaufenden Kühlmittelkanal (9), der stirnseitig axial am Schneidelement (7) ausmündet.

## Beschreibung

In der Dentalchirurgie werden insbesondere zur Vorbereitung des Kieferknochens zur Aufnahme eines Implantates bohrerähnliche Instrumente benötigt. Diese Instrumente weisen ein mit einem Winkelstück verbindbares Spannende auf und einen daran anschließenden Arbeitsbereich sowie an der Spitze einen Schneidenbereich.

Die Instrumente werden aus korrosionsbeständigem Stahl hergestellt und weisen einen axialen, am Spannende offenen Kühlmittelkanal auf, durch den über das Winkelstück ein Kühlmittel, beispielsweise eine physiologische Kochsalzlösung zugeführt werden kann. Der Kühlmittelkanal ist als Sackbohrung ausgeführt und somit am schneidseitigen Ende des Instrumentes verschlossen. Im Arbeitsbereich sind seitliche, mit dem Kühlmittelkanal in Verbindung stehende radiale Austrittsöffnungen vorgesehen, durch die das Kühlmittel austreten kann und hierbei für die Kühlung des Kieferknochens sorgen soll. Der Arbeitsbereich ist auf seiner Außenfläche mit einem oder mehreren rinnenförmigen axialverlaufenden Abfuhrkanälen versehen, durch die das ausgebohrte Knochenmaterial zusammen mit dem Kühlmittel nach außen abgeführt wird. Da das Kühlmittel nicht unmittelbar im Eingriffsbereich der Schneiden am Knochen zugeführt wird, sondern mit Abstand zu diesem und seitlich austritt, wird nur eine unzureichende Kühlung erreicht, zumal das Kühlmittel mit dem ausgebohrten Knochenmaterial von der Eingriffsstelle der Schneiden wegbefördert wird.

Aus US-A-5,593,410 und WO 00/27301 sind Instrumente der vorbezeichneten Art bekannt.

Bei einem Schaftdurchmesser eines derartigen Instrumentes von nur 2,35 mm ist die Herstellung eines als Sackloch ausgebildeten Kühlmittelkanals und das Einbringen von Querbohrungen sehr kostenaufwendig, so daß derartige Instrumente sehr teuer sind.

Der Erfindung liegt die Aufgabe zugrunde, ein verbessertes dental-chirurgisches Instrument der vorbezeichneten Art zu schaffen, das eine verbesserte Kühlung der Eingriffstelle während des Bohrvorgangs ermöglicht.

Diese Aufgabe wird mit einem Instrument gelöst, das die im Anspruch 1 angegebenen Merkmale aufweist.

Da es bei Implantationsmaßnahmen üblich ist, zunächst eine Pilotbohrung in den Kieferknochen mit einem normalen Bohrer einzubringen, der einen geringeren Durchmesser, üblicherweise 1,6 mm oder 2 mm aufweist, als das Spezialinstrument, kann die eingebrachte Pilotbohrung dann mit Hilfe des erfindungsgemäßen Instrumentes auf den endgültigen Durchmesser aufgebohrt werden.

Der besondere Vorteil des erfindungsgemäßen Instrumentes besteht darin, daß der Kühlmittelkanal unmittelbar axial zum Schneidenbereich ausmündet, so daß das Kühlmittel direkt auf den Eingriffsbereich der Schneidkanten am Knochen gelangt und die Kühlung bewirkt. Durch die Anordnung der beiden radialen und mit Abstand zueinander angeordneten Schneidelemente wird das axial in den Eingriffsbereich zuströmende Kühlmittel infolge der Rotation des Instrumentes auch nach außen an die Bohrungswandung befördert und kann so das ausgebohrte Knochenmaterial unmittelbar an den Schneidkanten unter gleichzeitiger Kühlung ausspülen und über die auf der Außenfläche des Arbeitsbereiches angeordnete Nut abströmen. Die Schneidelemente wirken hierbei auf das Kühlmittel nach Art einer "Kreiselpumpe", so daß trotz des geringen Zulaufdrucks im Kühlmittelkanal ein einwandfreier Abfluß aus dem Eingriffsbereich gewährleistet ist. Die auf der Außenfläche des Arbeitsbereiches angeordnete Nut kann entweder als rein axiale Nut oder auch als schraubenförmige Nut ausgebildet sein.

Der fertigungstechnische Vorteil des erfindungsgemäßen Instrumentes besteht darin, daß für den zentralen Kühlmittelkanal statt eines Sackloches nur noch eine axial durchgehende, an beiden Endseiten des Instrumentes offene Längsbohrung vorzusehen ist.

Weitere Ausgestaltungen und Vorteile der Erfindung sind aus der nachfolgenden Beschreibung anhand von Zeichnungen von Ausführungsbeispielen zu entnehmen. Die Zeichnungen zeigen:
- Fig. 1: eine Seitenansicht eines Dentalinstrumentes in starker Vergrößerung,
- Fig. 2: das Dentalinstrument gem. Fig. 1 um 90° gedreht,
- Fig. 3: in weiterer Vergrößerung eine Aufsicht auf den Schneidenbereich des Instrumentes gem. Fig. 1,
- Fig. 4, 5 und 6: in verschiedenen Ansichten eine Ausführungsform mit eingesetzten Schneidelementen,
- Fig. 7, 8 und 9: in verschiedenen Ansichten eine Abwandlung der Ausführungsform gem. Fig. 4
- Fig 10, 11 und 12: in verschiedenen Ansichten ein Dentalinstrument mit stufenförmig abgesetzten Schneidenanordnungen.

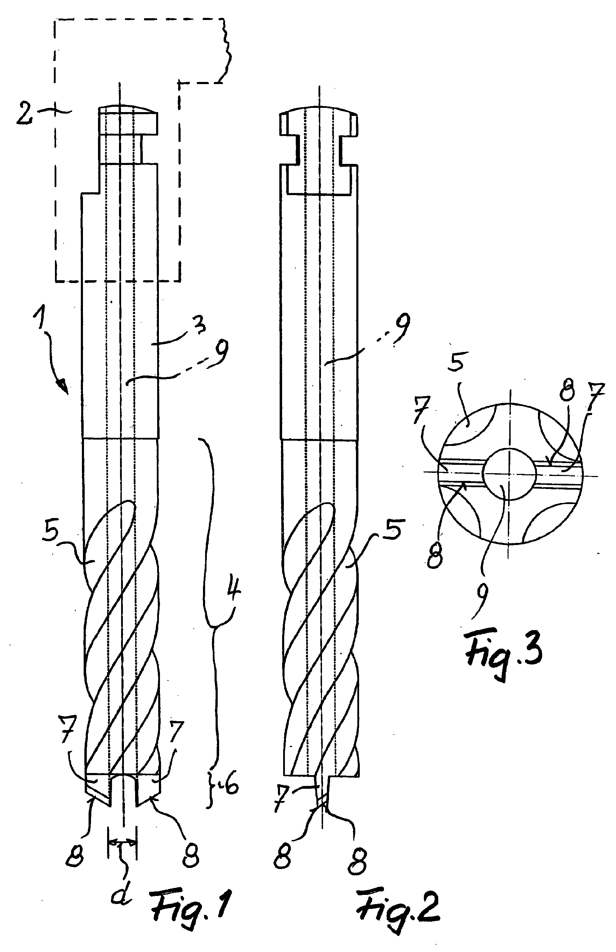

Das in Fig. 1 dargestellte rotierende dental-chirurgische Instrument für die Vorbereitung eines Kieferknochens zur Aufnahme eines Implantates weist einen Grundkörper 1 auf, der ein mit einem angedeuteten Winkelstück 2 verbindbares Spannende 3 besitzt. An das Spannende 3 schließt sich ein Arbeitsbereich 4 an, der auf seiner Außenfläche mit im wesentlichen axial verlaufenden Nuten 5 versehen ist. Bei dem hier dargestellten Ausführungsbeispiel sind vier Nuten mit wendelförmigem Verlauf vorgesehen.

Statt eines wendelförmigen Verlaufs kann der Arbeitsbereich 4 auch nach Art eines sogenannten "Kanonenbohrers" gestaltet sein. Bei dieser Ausführungsform ist im Arbeitsbereich 4 wenigstens eine geradlinig verlaufende axial ausgerichtete Rinne vorgesehen.

An den Arbeitsbereich 4 schließt sich ein Schneidenbereich 6 an, der wenigstens zwei im wesentlichen radial ausgerichtete, stegförmige Schneidelemente 7 aufweist, die stirnseitig jeweils mit einer Schneidkante 8 versehen sind. Die Schneidelemente 7 sind einstückig stoffschlüssig mit dem Material des Arbeitsbereichs verbunden und aus diesem beispielsweise durch Schleifen herausgearbeitet.

Im Grundkörper 1 ist ein axial verlaufender Kühlmittelkanal 9 vorgesehen, der am Spannende 3 offen ausmündet und mit einem entsprechenden Zulaufkanal im Winkelstück 2 verbindbar ist.

Im Schneidenbereich 6 mündet der Kühlmittelkanal 9 zwischen den beiden Schneidelementen 7 aus. Der Abstand d zwischen den beiden Schneidelementen 7 entspricht dem Durchmesser des Kühlmittelkanals 9, so daß ein großer Austrittsquerschnitt gegeben ist.

Da bei der Vorbereitung des Kieferknochens zur Aufnahme eines Implantates zunächst mit einem dünnen normalen Bohrer eine Pilotbohrung bis auf die geforderte Tiefe eingebracht worden ist, kann mit dem hier dargestellten Instrument, das einen größeren Durchmesser aufweist, die Pilotbohrung auf Maß aufgebohrt werden. Das Kühlmittel tritt aus dem Kühlmittelkanal 9 in Arbeitsrichtung des Instrumentes zwischen den beiden Schneidelementen 7 aus und strömt gegen den Knochen im Eingriffsbereich der Schneidkanten 8. Das Kühlmittel wird in der Bohrung infolge der Rotation über die radial ausgerichteten. stegförmigen Schneidelemente 7 radial nach außen "gepumpt", so daß trotz des geringen Drucks für das Kühlmittel im Kühlmittelkanal 9 eine einwandfrei Abfuhr von Kühlmittel und ausgebohrtem Knochenmaterial über die Nuten 5 erfolgt. Von Vorteil ist hierbei, daß das axial austretende Kühlmittel bis auf den Grund der Pilotbohrung gelangen kann, so daß im unmittelbaren Eingriffsbereich der Schneidkanten 8 immer frisches Kühlmittel vorhanden ist und für eine entsprechende Wärmeabfuhr sorgt.

Ggf. kann mit einem weiteren Instrument dieser Bauform, das jedoch einen größeren Durchmesser aufweist, der Bohrvorgang wiederholt werden.

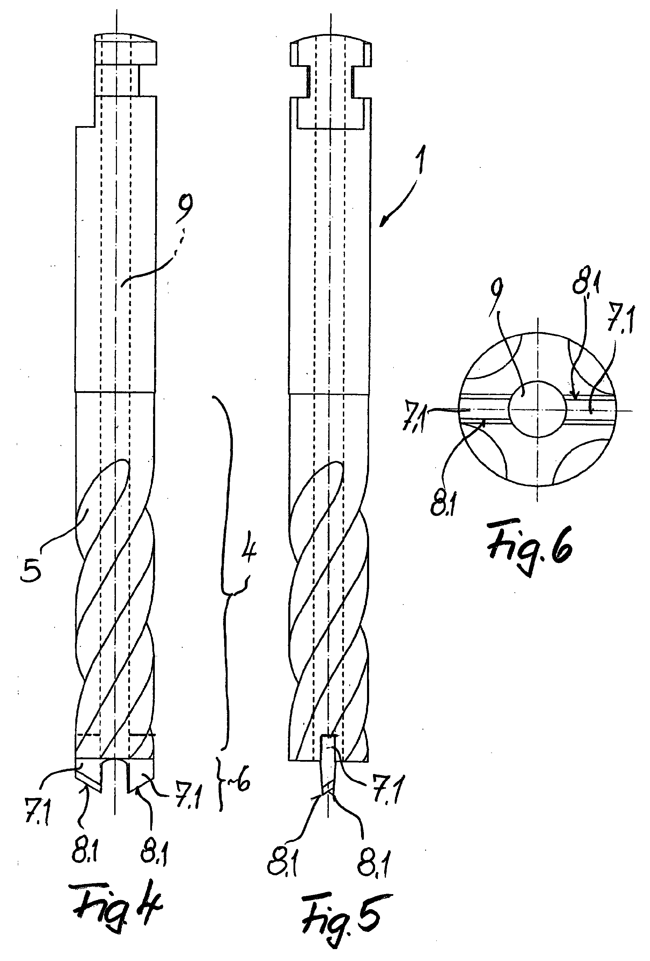

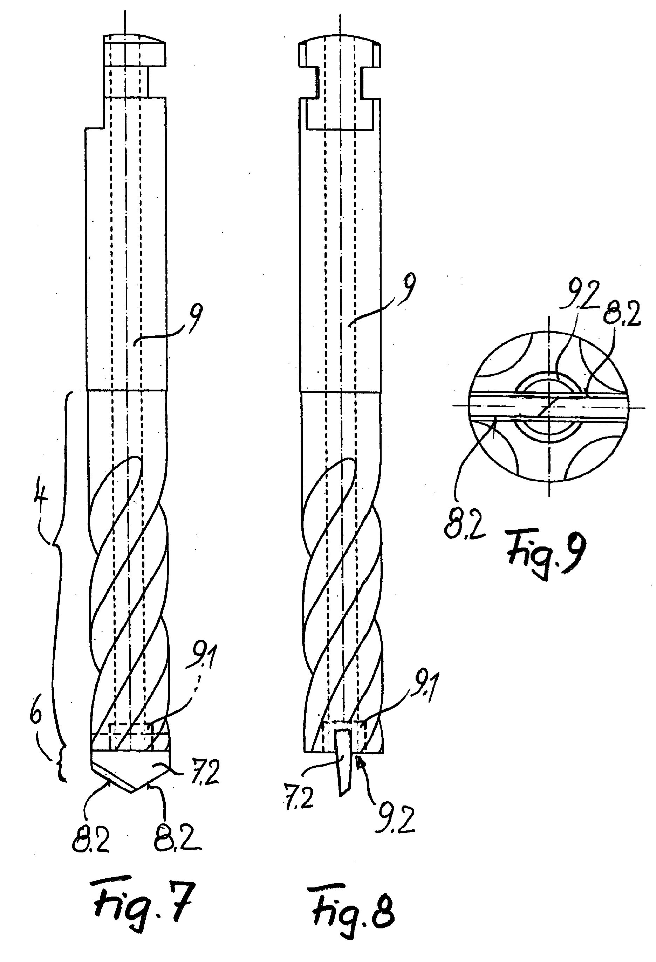

In den Fig. 4 bis 6 ist in verschiedenen Ansichten eine gegenüber der Ausführungsform gem. den Fig. 1 bis 3 abgewandelte Ausführungsform dargestellt, bei der die Schneidkanten 8.1 an zwei gesonderten stegförmigen Schneidelementen 7.1 angeordnet sind, die aus einem anderen Material als dem Material des Grundkörpers 1 bestehen. Die Schneidelemente 7.1 können beispielsweise aus einem besonderen Schneidwerkstoff, beispielsweise einem Hartmetall bestehen und sind in einen entsprechenden Schlitz im Grundkörper 1 eingelötet.

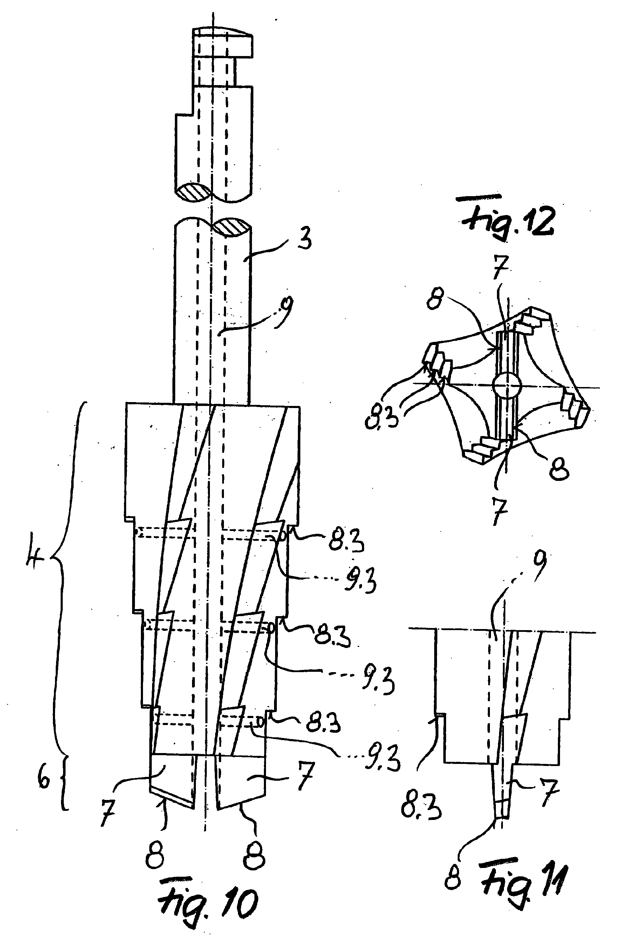

In den Fig. 7 bis 9 ist eine weitere Abwandlung der Ausführungsform gem. Fig. 4 bis 6 dargestellt. Bei dieser Ausführungsform ist nur ein mit zwei Schneidkanten 8.2 versehenes stegförmiges Schneidelement 7.2 aus einem gesonderte Schneidwerkstoff, beispielsweise Hartmetall stirnseitig angeordnet, das sich über den gesamten Durchmesser des Arbeitsbereichs erstreckt.

Der Kühlkanal 9 ist hierbei auf der Stirnseite auf einen größeren Durchmesser ausgebohrt, so daß durch die so gebildete Vertiefung 9.1 zu beiden Seiten des Schneidelementes 7.2 genügend große Durchtrittsquerschnitt 9.2 für das Kühlmittel vorhanden sind.

Sofern die für das Implantat herzustellende Bohrung stufenförmig abgesetzt sein muß, kann nun nach einem ersten Aufbohren der Pilotbohrung bis auf die vorgesehene Tiefe anschließend mit einem zweiten Instrument mit entsprechend größerem Durchmesser der gewünschte stufenförmige Ansatz durch ein weiteres Aufbohren erzeugt werden.

Sofern die für das Implantat herzustellende Bohrung stufenförmig abgesetzt sein muß, kann im Anschluß an das Einbringen der Pilotbohrung auch mit einem Instrument der in den Fig. 10 bis 12 dargestellten Bauform, das stufenförmig abgesetzt zunehmende Durchmesser aufweist, die gewünschte Stufenform durch eine weitere Aufbohrung in einem Arbeitsgang erzeugt werden.

Das in den Fig. 10 bis 12 dargestellte Stufen-Instrument weist einen Arbeitsbereich 4 auf, der von der Spitze aus stufenweise zunehmende Durchmesser besitzt. Jeweils im Übergang zum nächstgrößeren Durchmesser sind stirnseitig ausgerichtete Zusatzschneidkanten 8.3 vorgesehen, denen jeweils über wenigstens einen, vom axialen Kühlkanal 9 abzweigenden Querkanal 9.3 das Kühlmittel im Eingriffsbereich zugeführt wird. Die Abstufung am Instrument entspricht der gewünschten Abstufung für die herzustellende Bohrung.

Auch ein derartiges Stufen-Instrument kann entsprechend Fig. 4 oder 7 eingesetzte Schneidelemente 7.1 bzw. 7.2 aufweisen und hinsichtlich der Kühlmittelzufuhr zum Eingriffsbereich entsprechend ausgeführt sein.

## Patentansprüche

1. Rotierendes dental-chirurgisches Instrument für die Vorbereitung eines Kieferknochens zur Aufnahme eines Implantates, mit einem Grundkörper (1), der ein mit einem Winkelstück (2) verbindbares Spannende (3) und einen daran anschließenden Arbeitsbereich (4) aufweist, der auf seiner Außenfläche mit wenigstens einer im wesentlichen axial verlaufenden Nut (5) versehen ist und der einen endseitigen Schneidenbereich (6) mit wenigstens einem stegförmigen Schneidelement (7; 7.1; 7.2) versehen ist, das zwei sich radial erstreckende, stirnseitig ausgerichtete Schneidkanten (8) aufweist, sowie mit einem im Grundkörper (1) axial verlaufenden Kühlmittelkanal (9), der stirnseitig axial am Schneidelement (7) ausmündet.

2. Instrument nach Anspruch 1, **dadurch gekennzeichnet, daß** zwei sich radial erstreckende und mit stirnseitigen Schneidkanten (8) versehene stegförmige Schneidelemente (7; 7.1) vorgesehen sind, die diametral mit Abstand zueinander angeordnet sind und daß der axial verlaufende Kühlmittelkanal (9) stirnseitig zwischen den beiden Schneidelementen (7; 7.1) ausmündet.

3. Instrument nach Anspruch 1 oder 2, **dadurch gekennzeichnet, daß** der Abstand (d) der Schneidelemente (7; 7.1) etwa dem Durchmesser des Kühlmittelkanals (9) entspricht.

4. Instrument nach Anspruch 1 bis 3, **dadurch gekennzeichnet, daß** jeweils das Schneidelement (7.1; 7.2) aus einem anderen Material, vorzugsweise einem härteren Material als der Grundkörper (1) besteht.

5. Instrument nach Anspruch 4, **dadurch gekennzeichnet, daß** jeweils das Schneidelement (7.1; 7.2) aus einem Hartstoff besteht.

6. Instrument nach Anspruch 1 bis 5, **dadurch gekennzeichnet, daß** in dem an den Schneidenbereich (6) angrenzenden Bereich mit axialem Abstand zu den Schneidelementen (7) ein mit jeweils stufenförmig größeren Durchmessern ausgebildeter Arbeitsbereich (4) anschließt, der an den stufenförmigen Übergängen jeweils mit wenigstens zwei axial ausgerichteten Schneidkanten (8.3) versehen ist.

7. Instrument nach einem der Ansprüche 1 bis 6, **dadurch gekennzeichnet, daß** jeweils den weiteren Schneidkanten (8.3) wenigstens ein radial ausgerichteter mit dem Kühlmittelkanal (9) verbundener Querkanal (9.3) zugeordnet ist.
